# EUROPÄISCHE PATENTSCHRIFT

(11) **EP 0 870 141 B1**
(45) Veröffentlichungstag und Bekanntmachung des Hinweises auf die Patenterteilung: **05.09.2001**
(21) Anmeldenummer: 96914846.9
(22) Anmeldetag: 06.05.1996
(51) Int. Cl.: F16K 17/38, F16K 31/56

(54) **ABSPERRVENTIL**
CHECK VALVE
SOUPAPE D'ARRET

(30) Priorität: 09.05.1995 DE 19516996
(43) Veröffentlichungstag der Anmeldung: 14.10.1998
(73) Patentinhaber: SIEMENS AKTIENGESELLSCHAFT, 80333 München (DE)
(72) Erfinder: CONRADS, Hermann-Josef, D-91074 Herzogenaurach (DE); LAURER, Erwin, D-91096 Möhrendorf (DE)
(74) Vertreter: Tergau & Pohl Patentanwälte
(86) Internationale Anmeldenummer: DE9600788
(87) Internationale Veröffentlichungsnummer: WO9635899

(56) Entgegenhaltungen:
- EP-A- 0 145 828
- DE-B- 1 001 556
- GB-A- 538 923
- US-A- 1 632 144
- US-A- 2 638 106
- US-A- 3 916 930

## Beschreibung

Die Erfindung betrifft ein Absperrventil, insbesondere in einem Meßleitungsanschluß für eine erhitzte, unter Druck stehende Flüssigkeit, die in einem Containment, insbesondere einer kerntechnischen Anlage, eingeschlossen ist, wobei ein Meßgerät außerhalb des Containments mit einem vorgeschalteten Absperrventil anordenbar ist, das über eine Durchführung an einer Wand des Containments befestigt ist und ein Ventilgehäuse mit einem Ventilsitz und einem Ventilteller umfaßt.

Meßleitungsanschlüsse befinden sich z.B. in Kernkraftwerken mit einem Druckwasserreaktor in einem das Containment umgebenden Ringraum, der zum überwiegenden Teil als begehbarer Betriebsraum ausgebildet ist. Der Druck in ihnen beträgt, wenn Werte des Primärkreises erfaßt werden sollen, ca. 155 bar bei ursprünglich 350° C. Ohne Strömung bildet sich am Ende des Meßleitungsanschlusses dann ein Kondensat mit ca. 20° C.

Derartige Meßleitungsanschlüsse sind bisher bereits im allgemeinen innerhalb und außerhalb des Containments über handbetätigte Ventile absperrbar gewesen. Solche Ventile sind z.B. aus der DE OS 33 16 895 bekannt. Im Falle eines Lecks mußte dieses erst ausfindig gemacht werden, bevor eine Absperrung vorgenommen werden konnte. Das war besonders dann zeitraubend, wenn das Ventil im Inneren des Containments aufgesucht und geschlossen werden mußte, weil das Ventil im Ringraum in die Leckage einbezogen war, das Leck also irgendwo zwischen den beiden Ventilen lag.

Ein Ventil, das abhängig von der Temperatur betätigt wird, ist aus der US 1 632 144 bekannt. Dazu ist ein Dehnungsstreifen in einem Stab angeordnet, der auf eine Klinke wirkt. Die Verbindung zwischen dem Stab und der Klinke wird über eine Öse hergestellt. Da sich mehrere Ösen an der Klinke behindern würden kann die bekannte Einrichtung nur mit einem Dehnungsstreifen aufgebaut werden.

Der Erfindung liegt die Aufgabe zugrunde ein Absperrventil anzugeben, bei dem unter Ausnutzung der Leckage die ausströmende Flüssigkeit auf direktem Weg zum Stillstand kommt. Das Absperrventil soll in jeder räumlichen Lage zuverlässig arbeiten.

Die Aufgabe wird gemäß der Erfindung dadurch gelöst, daß der Ventilteller im Inneren mehrerer rotationssymmetrisch angeordneter Klinkenteile sitzt, die ihrerseits von dem Dehnungsstreifen umgeben sind.

Der Ventilteller wird von einer Feder in Richtung auf den Ventilsitz gedrückt. Entgegen der Feder wird er von den Klinkenteilen gehalten, die mit der Flüssigkeit ausgesetzten Dehnungsstreifen gekoppelt sind. Diese Dehnungsstreifen stehen mit dem Ventilgehäuse in Verbindung. Sie haben einen höheren Wärmeausdehnungskoeffizient als das Ventilgehäuse und bewegen bei Erwärmung die Klinkenteile in Lösungsrichtung.

Hierdurch erfolgt bei einer Erwärmung des Ventils mit gleichzeitiger Erwärmung des Ventilgehäuses und des Dehnungsstreifens eine Ausdehnung des Dehnungsstreifens gegenüber dem Ventilgehäuse, so daß die Klinkenteile in Lösungsrichtung bewegt und eine sichere Auslösung, d.h. ein Verschluß, des Ventils gewährleistet wird.

Zur Verstärkung des Effektes unterschiedlicher Ausdehnung zwischen Dehnungsstreifen und Ventilgehäuse hat der Dehnungsstreifen vorzugsweise eine geringere Masse und dadurch eine geringere Wärmekapazität als das Ventilgehäuse.

Der Dehnungsstreifen ist hierzu vorzugsweise als Rohr ausgebildet. Er kann je nach Anforderungsfall aber auch als Zylinder mit beliebigem Querschnitt, beispielsweise rechteckig, quadratisch oder oval, ausgebildet sein. Andere Ausgestaltungen, wie verstrebte Metallplatten sind ebenfalls denkbar.

Bei der Erfindung wird die durch die Leckage verursachte Erhöhung der Flüssigkeitstemperatur im Meßleitungsanschluß zum selbsttätigen Absperren der Leckstelle benutzt. Diese Temperaturerhöhung wird durch den Dehnungsstreifen erfaßt und zugleich als Kraft ausgenutzt, die die Verklinkung löst und die Federkraft zum selbsttätigen Schließen des Absperrventils freigibt.

Beispielsweise gehen die Klinkenteile von einer gemeinsamen Platte aus, die an dem von den Klinkennasen abgekehrten Ende mit einem Innenrand am Ventilgehäuse abgestützt ist und mit einem Außenrand auf dem Dehnungsstreifen aufsitzt. Die Platte wirkt dabei wie eine Tellerfeder. Bei ihrer Verformung gleiten die Klinkenteile mit ihren Klinkennasen vom Ventilteller.

Eine gleichmäßige Erwärmung und damit Ausdehnung des Dehnungsstreifens läßt sich dadurch erreichen, daß der rohrförmige Dehnungsstreifen Öffnungen für den Durchtritt der Flüssigkeit zum Ventilsitz aufweist.

Es ist ferner vorteilhaft, wenn der Ventilteller an einem Ende einer Ventilspindel angebracht ist, die einen Haltebund aufweist, und das andere Ende der Ventilspindel durch die Platte der Klinkenteile aus einer Öffnung des Ventilgehäuses ragt. An dem aus dem Ventilgehäuse ragenden Teil der Ventilspindel kann eine Rückstellkraft für das Öffnen des Ventils angreifen. Im Normalbetrieb kann die Öffnung mit einer Kappe verschlossen werden.

Eine besonders gedrängte Bauweise des erfindungsgemäßen Meßleitungsanschlusses erhält man dadurch, daß die Ventilfeder auf dem Haltebund aufsitzt und auf die dem Ventilsitz zugekehrte Seite der Platte drückt.

Für die Dichtigkeit ist: es günstig, wenn der Ventilteller mit Spiel auf das eine Ende der Ventilspindel aufgeschraubt und dort mit einem Stift gesichert ist, weil sich der Ventilteller dann auf den Ventilsitz einstellen kann.

Vorzugsweise ist das Absperrventil in einer Meßleitungsanordnung zur Bestimmung des Druckes in einem Reaktordruckbehälter einer Kernkraftanlage angeordnet. Der Reaktordruckbehälter wird von einem Sicherheitsbehälter umgeben, wobei die Meßleitungsanordnung durch eine Durchführung aus dem Sicherheitsbehälter herausgeführt ist und das Absperrventil unmittelbar hinter der Durchführung angeordnet ist. Hierdurch ist gewährleistet, daß bei einem Leck in der Meßleitungsanordnung außerhalb des Sicherheitsbehälters, welcher zu einem Austrag von Radioaktivität außerhalb des Sicherheitsbehälters führen würde, eine Absperrung des gesamten außerhalb des Sicherheitsbehälters liegenden Teils der Meßleitunganordnung gegeben ist. Hierdurch ist auf alle Fälle eine schnelle und passive Absperrung der Meßleitungsanordnung gewährleistet, so daß der mögliche Austrag von Radioaktivität äußerst gering gehalten wird. Da es ebenfalls keiner manuellen Eingriffe des Bedienungspersonals bedarf, wird dadurch die passive Sicherheit innerhalb der Kernkraftanlage erhöht. Insbesondere wird auch die potentielle Strahlenbelastung von Wartungspersonal vermindert.

Vorzugsweise hat das Absperrventil eine Vorrichtung, beispielsweise eine Spindel, durch die nach einem Auslösen der Klinkenteile der Ventilteller manuell in die, das Absperrventil öffnende Position zurückbringbar ist. Die Vorrichtung zur Wiederöffnung des Absperrventils kann beispielsweise auch über einen Elektromotor automatisch bedienbar sein.

Weitere vorteilhafte Ausgestaltungen des Absperrventils sind den Unteransprüchen zu entnehmen.

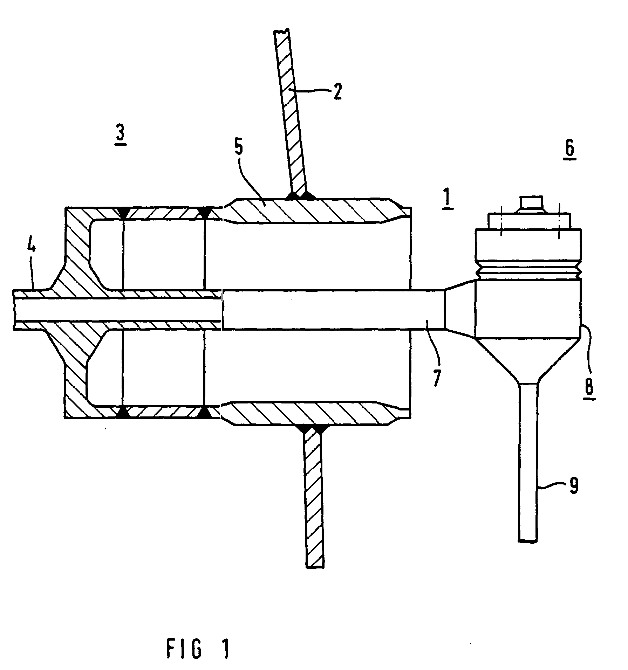

Zur näheren Erläuterung der Erfindung wird im folgenden anhand der Zeichnung ein Ausführungsbeispiel beschrieben. Dabei zeigt
- FIG 1: einen Meßleitungsanschluß in einem Vertikalschnitt durch die Containmentwand,
- FIG 2: einen Vertikalschnitt durch das Absperrventil des Meßleitungsanschlusses in geöffneter Stellung in größerem Maßstab,

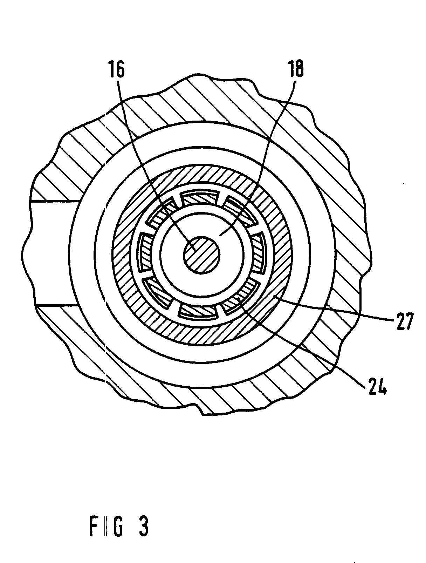

- FIG 3: einen Horizontalschnitt durch das Absperrventil und
- FIG 4: einen Vertikalschnitt ähnlich FIG 2, aber bei geschlossenem Absperrventil.
Der Meßleitungsanschluß gehört zu einem Druckwasserreaktor (siehe FIG 1), von dem nur das die aktiven Teile einschließende Containment 2 dargestellt ist. Das Containment 2 ist eine Stahlkugel. Durch sie kommt von dem im Inneren 3 liegenden Primärkreis des Druckwasserreaktors eine Meßleitung 4 über eine Durchführung 5, die in einen das Containment umgebenden Ringraum 6 ragt. An dem dem Ringraum 6 zugekehrten Ende 7 der Durchführung 5 sitzt ein Absperrventil 8. Von diesem führt ein Teil 9 der Meßleitung 4 vertikal nach unten zu einem nicht dargestellten Druckmeßumformer.

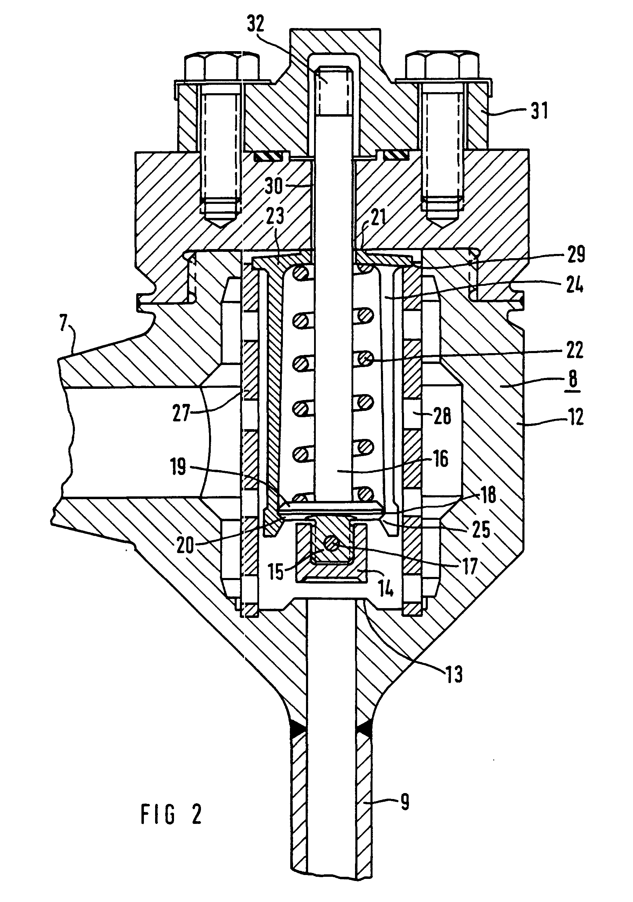

Das Absperrventil 8 (siehe FIG 2) umfaßt ein Ventilgehäuse 12 mit einem Ventilsitz 13, dem ein Ventilteller 14 gegenübersteht. Der Vertilteller 14 ist mit viel Spiel auf das untere Ende 15 einer Ventilspindel 16 aufgeschraubt und dort mit einem Stift 17 gesichert.

Oberhalb des Ventiltellers 14 besitzt die Ventilspindel 16 einen Haltebund 18 mit zwei gegenüberliegenden konischen Flächen 19 und 20. Auf dem Haltebund 18 sitzt eine die Ventilspindel 16 umgebende Spiralfeder 22, deren oberes Ende gegen eine Platte 23 drückt. Die Platte 23 stützt sich mit einer Schulter 21 an der Innenseite des Ventilgehäuses 12 ab.

An der Platte 23 sitzen acht rotationssymmetrisch angeordnete Klinkenteile 24, die vertikal nach unten verlaufen und bei geöffnetem Ventil mit Klinkennasen 25 unter den Haltebund 18 greifen.

Die Klinkenteile 24 sind von einem Rohr 27 umgeben, das als Dehnungsstreifen dient. Das Rohr 27 ist mit Öffnungen 28 versehen, so daß im Normalbetrieb eine Verbindung vom Meßleitungsende 7 über den Ventilsitz 13 zum Meßleitungsteil 9 vorhanden ist. Auf dem oberen Rand des Rohres 27 sitzt der Außenrand 29 der Platte 23.

Die Ventilspindel 16 ragt mit ihrem oberen Ende durch eine zentrale Bohrung der Platte 23 und weiter durch eine Öffnung 30 des Ventilgehäuses 12. Diese ist bei betriebsbereitem Ventil 8 mit einer Kappe 31 verschlossen. Nach dem Abnehmen der Kappe 31 kann die Ventilspindel 16 über das Gewinde 32 betätigt, d.h. in die Öffnungsstellung gebracht werden.

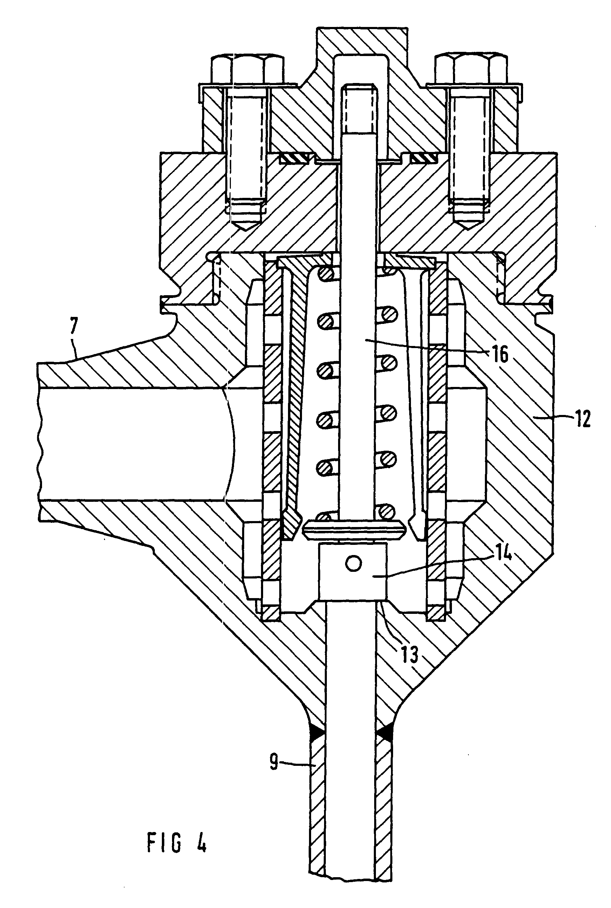

Im Falle eines Lecks an dem hinter dem Ventil 8 liegenden Teil des Meßleitungsanschlusses 1 strömt aus dem Primärkreis des Druckwasserreaktors die bis zu ca. 350° C heiße Primärflüssigkeit durch das Ventilgehäuse 12 und erwärmt das Rohr 27. Das Rohr 27 dehnt sich insbesondere aufgrund seines gröβeren Wärmeausdehnungskoeffizienten gegenüber dem Wärmeausdehnungskoeffizienten des Ventilgehäuses 12 stärker aus als dieses und verformt dabei die Platte 23 so, daß sich die Klinkenteile 24 vom Haltebund 18 lösen. Es ergibt sich nun die in Fig. 4 gezeichnete Stellung, bei der der Ventilteller 14 von der Spiralfeder 22 auf den Ventilsitz 13 gepreßt wird. Der sich daraufhin ausbildende Differenzdruck im Bereich des auf dem Ventilsitz 13 aufsitzenden Ventiltellers 14 trägt an einer verbesserten Sitzdichtigkeit bei. Das Ventil 8 hat damit die Leckage selbsttätig unterbunden.

Nach dem Absperren und Abkühlen des Meßleitungsanschlussen 1 kann in drucklosem Zustand die Kappe 31 gelöst und die Ventilspindel 16 mit einem geeigneten Werkzeug in die Öffnungsstellung zurückgebracht werden. Dann steht nach dem Abdichten des Lecks der Meßleitungsanschluß wieder zur Verfügung.

## Patentansprüche

1. Absperrventil (8) für eine erhitzte, unter Druck stehende Flüssigkeit, die in einem Containment (2), insbesondere einer kerntechnischen Anlage eingeschlossen ist, welches über eine Durchführung (5) an einer Wand (2) des Containments befestigbar ist,
bestehend aus einem Ventilgehäuse (12), in dem ein Ventilteller (14) von einer Feder (22) in Richtung auf einen Ventilsitz (13) gedrückt und entgegen der Feder (22) von einer Klinke (24) zu halten ist, die mit einem der Flüssigkeit ausgesetzten Dehnungsstreifen (27) gekoppelt ist, der mit dem Ventilgehäuse (12) in Verbindung steht, einen höheren Wärmeausdehnungskoeffizient als das Ventilgehäuse (12) hat und bei Erwärmung die Klinke (24) in Lösungsrichtung bewegt,
**dadurch gekennzeichnet,** daß der Ventilteller (14) im Inneren mehrerer rotationssymmetrisch angeordneter Klinkenteile (24) sitzt, die ihrerseits von dem Dehnungsstreifen (27) umgeben sind.

2. Absperrventil (8) nach Anspruch 1,
**dadurch gekennzeichnet**, daß der Dehnungsstreifen (27) als Rohr ausgebildet ist.

3. Absperrventil (8) nach Anspruch 1 oder 2,
**dadurch gekennzeichnet**, daß die Klinkenteile (24) von einer gemeinsamen Platte (23) ausgehen, die an dem von Klinkennasen (25) abgekehrten Ende mit einem Innenrand (21) am Ventilgehäuse (12) abgestützt ist und mit einem Außenrand (29) auf dem Dehnungsstreifen (27) aufsitzt.

4. Absperrventil (8) nach Anspruch 3,
**dadurch gekennzeichnet**, daß die Feder (22) auf dem Haltebund (18) aufsitzt und auf die dem Ventilsitz (13) zugekehrte Seite der Platte (23) drückt.

5. Absperrventil (8) nach Anspruch 3 oder 4,
**dadurch gekennzeichnet**, daß der Ventilteller (14) an einem Ende einer Ventilspindel (16) angebracht ist, die einen Haltebund (18) aufweist, und daß das andere Ende der Ventilspindel (16) durch die Platte (23) der Klinkenteile (24) aus einer Öffnung (30) des Ventilgehäuses (12) führt.

6. Absperrventil (8) nach Anspruch 5,
**dadurch gekennzeichnet**, daß der Ventilteller (14) mit Spiel auf das eine Ende der Ventilspindel (16) aufgeschraubt und dort mit einem Stift (17) gesichert ist.

7. Absperrventil (8) nach einem der vorhergehenden Ansprüche
**dadurch gekennzeichnet**, daß der Dehnungsstreifen (27) Öffnungen (28) für den Durchtritt der Flüssigkeit zum Ventilsitz (13) aufweist.

8. Absperrventil (8) nach einem der vorhergehenden Ansprüche,
**dadurch gekennzeichnet**, daß der Dehnungsstreifen (27) eine geringere Masse und eine geringere Wärmekapazität als das Ventilgehäuse (12) besitzt.

9. Verfahren zur Verwendung eines Absperrventils (8) nach einem der vorhergehenden Ansprüche in einer Meßleitungsanordnung zur Bestimmung des Druckes in einem Reaktordruckbehälter einer Kernkraftanlage, welcher von einem Sicherheitsbehälter (2) umgeben ist, wobei das Absperrventil (8) außerhalb des Sicherheitsbehälters (2) unmittelbar hinter einer Durchführung (5) des Sicherheitsbehälters (2) angeordnet ist.

## Claims

1. Shut-off valve (8) for a heated, pressurised liquid which is enclosed in a containment (2), in particular a nuclear installation, which shut-off valve can be fastened to a wall (2) of the containment via a lead-through (5),
comprising a valve housing (12), in which a valve disc (14) is pressed by a spring (22) in the direction of a valve seat (13) and is to be held against the spring (22) by a latch (24), which is coupled to an expansion strip (27) which is exposed to the liquid, which expansion strip is connected to the valve housing (12), has a higher coefficient of thermal expansion than the valve housing (12) and upon heating moves the latch (24) in the direction of release,
**characterised in that** the valve disc (14) sits inside a plurality of latch portions (24) which are arranged rotationally symmetrically and are in turn surrounded by the expansion strip (27).

2. Shut-off valve (8) according to claim 1, **characterised in that** the expansion strip (27) is constructed as a tube.

3. Shut-off valve (8) according to claim 1 or 2, **characterised in that** the latch portions (24) start from a common plate (23) which, at the end which faces away from latch noses (25), is supported on the valve housing (12) with an inner edge (21) and, with an outer edge (29), rests on the expansion strip (27).

4. Shut-off valve (8) according to claim 3, **characterised in that** the spring (22) rests on the holding collar (18) and presses on the side of the plate (23) that faces the valve seat (13).

5. Shut-off valve (8) according to claim 3 or 4, **characterised in that** the valve disc (14) is mounted on one end of a valve stem (16), which has a holding collar (18), and in that the other end of the valve stem (16) goes through the plate (23) of the latch portions (24) out of an opening (30) in the valve housing (12).

6. Shut-off valve (8) according to claim 5, **characterised in that** the valve disc (14) is screwed on to the one end of the valve stem (16) with play and is secured there with a pin (17).

7. Shut-off valve (8) according to one of the preceding claims, **characterised in that** the expansion strip (27) has openings (28) for the passage of the liquid to the valve seat (13).

8. Shut-off valve (8) according to one of the preceding claims, **characterised in that** the expansion strip (27) has a lower mass and a lower thermal capacity than the valve housing (12).

9. Method for using a shut-off valve (8) according to one of the preceding claims in a measuring-lead arrangement for determining the pressure in a reactor pressure vessel of a nuclear installation that is surrounded by a safety tank (2), the shut-off valve (8) being arranged outside the safety tank (2), directly behind a lead-through (5) of the safety tank (2).

## Revendications

1. Soupape d'arrêt (8) pour un liquide chauffé sous pression enfermé dans une enceinte de confinement (2), notamment d'une installation nucléaire, et qui est fixée sur une paroi (2) de l'enceinte de confinement par le biais d'une traversée (5),
formée d'un boîtier de soupape (12) dans lequel une tête de soupape (14) est pressée en direction d'un siège de soupape (13) par un ressort (22) et est retenue, clans le sens opposé au ressort, par un cliquet (24) couplé à une bande d'expansion (27) exposée au liquide, qui est reliée au boîtier de soupape (12) et possède un coefficient de dilatation thermique plus élevé que le boîtier de soupape (12) et, en cas de réchauffement, déplace le cliquet (24) dans la direction de déclenchement,
**caractérisée en ce que** la tête de soupape (14) est placée à l'intérieur de plusieurs parties de cliquet (24) disposées autour d'un axe de symétrie et qui sont entourées, pour leur part, par la bande d'expansion (27).

2. Soupape d'arrêt (8) selon la revendication 1, **caractérisée en ce que** la bande d'expansion (27) est exécutée en tant que tube.

3. Soupape d'arrêt (8) selon la revendication 1 ou 2, **caractérisée en ce que** les parties de cliquet (24) partent d'une plaque commune (23) dont un bord intérieur (21) est appuyé sur le boîtier de soupape (12) au niveau de l'extrémité éloignée des becs de cliquet (25) et dont un bord extérieur (29) est posé sur la bande d'expansion (27).

4. Soupape d'arrêt (8) selon la revendication 3, **caractérisée en ce que** le ressort (22) est posé sur un collet de retenue (18) et presse le côté de la plaque (23) tourné vers le siège de soupape (13).

5. Soupape d'arrêt (8) selon la revendication 3 ou 4, **caractérisée en ce que** la tête de soupape (14) est montée sur une extrémité d'une tige de soupape (16) qui est pourvue d'un collet de retenue (18), et en ce que l'autre extrémité de la tige de soupape (16) passe à travers la plaque (23) des parties de cliquet (24) par une ouverture (30) du boîtier de soupape (12).

6. Soupape d'arrêt (8) selon la revendication 5, **caractérisée en ce que** la tête de soupape (14) est vissée avec du jeu sur l'une des extrémités de la tige de soupape (16) où elle est fixée à l'aide d'une cheville (17).

7. Soupape d'arrêt (8) selon l'une des revendications précédentes, **caractérisée en ce que** la bande d'expansion (27) est pourvue d'ouvertures (28) pour le passage du liquide vers le siège de soupape (13).

8. Soupape d'arrêt (8) selon l'une des revendications précédentes, **caractérisée en ce que** la bande d'expansion (27) a une masse inférieure et une capacité thermique inférieure à celles du boîtier de soupape (12).

9. Procédé d'utilisation d'une soupape d'arrêt (8) selon l'une des revendications précédentes dans un dispositif de conduite de mesure servant à déterminer la pression dans une cuve de réacteur d'une centrale nucléaire entourée par une enceinte de confinement (2), la soupape d'arrêt (8) étant situé à l'extérieur de l'enceinte de confinement (2) et directement derrière une traversée (5) de l'enceinte de confinement (2).
